# EUROPEAN PATENT SPECIFICATION

(11) **EP 1 882 104 B1**
(45) Date of publication and mention of the grant of the patent: **10.04.2013**
(21) Application number: 06743537.0
(22) Date of filing: 02.05.2006
(51) Int. Cl.: F15B 15/28

(54) **AN ACTUATOR MEANS TO ACCOMPLISH A LINEAR MOVEMENT**
BETÄTIGUNGSMITTEL ZUR AUSFÜHRUNG EINER LINEAREN BEWEGUNG
MOYEN D ACTIONNEUR POUR RÉALISER UN MOUVEMENT LINÉAIRE

(30) Priority: 20.05.2005 FI 20055241
(43) Date of publication of application: 30.01.2008
(73) Proprietor: Metso Paper, Inc., 00130 Helsinki (FI)
(72) Inventor: LEHTO, Tony, FI-12240 Hikiä (FI)
(74) Representative: TBK
(86) International application number: PCT/FI2006/050175
(87) International publication number: WO 2006/123014

(56) References cited:
- EP-A1- 1 316 733
- WO-A1-93/25865
- WO-A1-99/28637
- GB-A- 1 371 436
- JP-A- 55 123 003
- TW-B- 565 658
- US-A- 3 893 377
- US-A- 4 026 523
- US-A- 4 981 070
- US-A- 5 007 276
- US-B1- 6 272 968

## Description

The present invention is connected to a fibre web machine, such as to paper machines and to tissue-paper machines and to cardboard machines and chemical pulp machines. The present invention, in more detail, relates to the regulating unit for the accomplishing of a linear movement, which is suitable for example for an active attenuation cylinder of the machine bodies and pipe systems of the fibre web machine, such as for example a power cylinder.

At the moment, there are not available such solutions on the market that would fir as a regulating unit, which produces the linear movement fast enough and/or reaches a sufficient power level.

There has been disclosed in a publication EP 819638 a reeling unit, in which the vibration of a press roller is dampened in two different ways. The press roller of the reeling unit, which has been presented in a publication, is a roller, which is pressed against the surface of the fibre web reel, which is under reeling process, and around which the fibre web to be reeled is winded. The press roller is to be pressed against the surface of the fibre web reel by precisely defined power and the position of the press roller is adjusted by means of load cylinders, which affect to the bearing housings, which loading cylinders can be pneumatic and/or hydraulic cylinders. According to an example, a pressure cylinder is fastened to a bearing housing or a rack is placed next to the bearing housing, which rack comprises a moving mass that has been placed between the load cylinders, in which case the load cylinders and the moving mass form a vibrator, which can be dimensioned to dampen appearing vibrations. According to another example, a pressure cylinder is fastened to the bearing housing, the pressure lines of the pressure cylinder being provided with a throttle means to dampen the movement of the cylinder.

This kind of pressure cylinder can be composed of the load cylinder of the pressing roller, which is throttled by a suitable way. This kind of a known damper solution is suitable for dampening of the vibrations of the roller, which moves actively, but this kind of a known damper solution does not have a direct effect on the vibrations of the machine skeleton or body. Furthermore, it is problematic, because the known damper solution is suitable to be installed only horizontally installed on a fixed base, because otherwise the mass of the known damper solution causes an extra load to the supports and bearing housings of rollers. Furthermore, the weakness is that the known damper solution cannot be applied for a multi-nip-calander, in which the vibration frequencies are so big and quick that the known damper solution does not have time to react but the known solutions even may increase the vibration sensitivity.

A vibration generating hydraulic device is known from JP-A- 55-123003. This device contains a tunable piston which consists of two piston parts which are adjustable in distance from each other as seen in a moving direction of the piston in the cylinder.

An object of the present invention is to eliminate or to reduce at least essentially drawbacks and weaknesses, which are related to the known technique. Another object of the present invention is to accomplish a new and inventive regulating unit, which could be used to produce a linear movement, which could produce the linear movement quickly and/or with sufficient power level. A third object of the present invention is to accomplish a new and inventive regulating unit for accomplishing the linear movement, which unit would be suitable for example for an active attenuation cylinder of the machine skeletons and pipe systems of the fibre web machine.

These objects are solved with a regulating unit according to claim 1.

Generally, these objects can be achieved by a regulating unit for accomplishing a linear movement, which regulating unit includes the frame part, which is advantageously a cylindrical frame part, which comprises a cylinder part and cylinder head, which define a piston space to their inside, and a piston unit, which is arranged be moved by means of pressurized medium in the said space for the piston that is inside the frame part, for example so that a form of the piston unit corresponds essentially to the piston space such that the said piston space includes a first space and a second space, a height of which first space, in which a piston part is moveable, is bigger than the facing height of a piston part of the said piston unit, a cross section area of which first space is bigger than a cross section area of a piston rod of the said piston unit, a cross section area of which second space, in which the piston rod is moveable with the piston part of the piston unit, is smaller that the cross section area of the cross section area of the said piston part, and that there are arranged means in the connection of the frame part for feeding pressurized medium into a cavity space, which is between the facing surfaces of the said piston part and the said first piston space, for moving the piston unit towards the cylinder head or vice versa.

So the invention is based generally on the quick regulating unit response, which is accomplished according to an example of the present invention by means of a combination of quick feeding valves, each valve having a high frequency valve response, which is advantageously of a class of about 2 kHz, and of one or more short feeding channel for a pressurized medium, whereby any delay caused thereof is as small as possible for feeding the pressurized medium from a container of the pressurized medium into cavity space, which is between facing parts of the piston part and the piston space, and thus to move the piston unit in the piston space.

According to a preferred embodiment of the invention, sealing leaks can be controlled by means of leak channels, which have been formed to a wall, which defines the piston space in the cylinder part, advantageously face-to-face with piston rings, which are in the piston unit. According to a realisation example the leak channel is formed by a milled set of grooves or by a groove, from which the leak of the pressurized medium can be directed to a silencer and/or to the leak line of the pressurized medium.

According to the invention, the pressurized medium, which controls the regulating unit, can be fluid or gaseous medium and in the control it is advantageous to adapt a feedback and utilize either a linear sensor or a power sensor as the sensor. The regulating unit, which is in accordance with the invention, can also be controlled naturally proportionally without the feedback.

The advantage of the present invention also is that, in addition to the dampening function, the regulating unit is also applicable for example as
- a testing cylinder, by which vibration of the hydraulic pipe system can be tested,
- a sub-cylinder, by which mistakes of a quick control cylinders having longer strokes can be corrected,
- a braking cylinder for non-locking industrial brake applications, and
- organs, by which a quick change in the volume can be produced in a container.

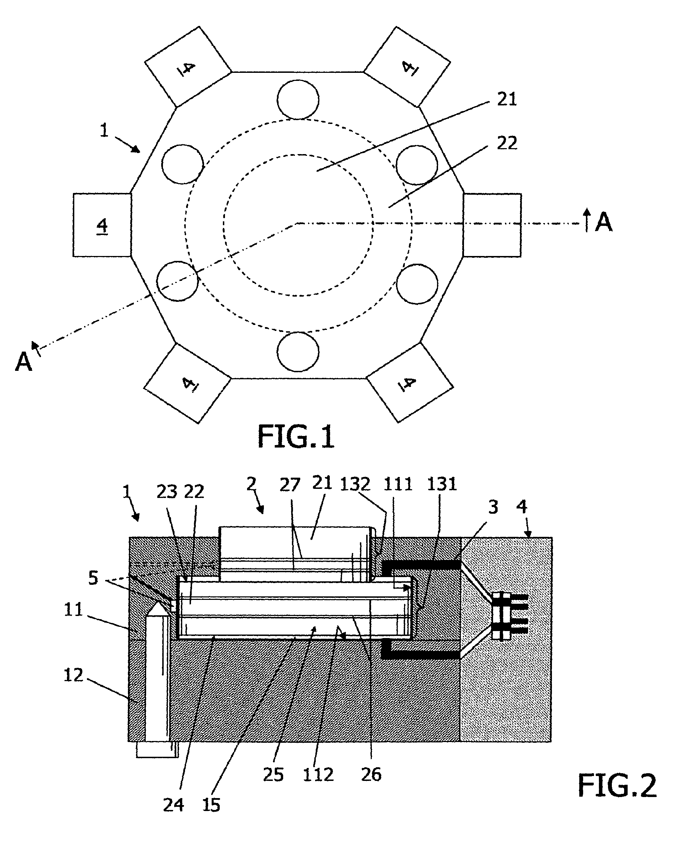

Other details of the present invention become clear in the following description of a preferred embodiment example, in which description have been referred to the figure FIG 1, which represents from underneath the regulating unit, which is in accordance with the advantageous embodiment of the present present invention and
the figure FIG.2 represents a cross sectional view of the regulating unit, which is in accordance with the figure FIG.1, along the line A-A of the figure FIG.1.

In the embodiment of figures FIG.1 and FIG.2 the regulating unit include for accomplishing the linear movement a frame part 1, which is advantageously a cylindrical frame part, which comprises a cylinder part and 11 cylinder heads 12, which have been connected by means of a bolted joint. Of course, it is possible that the frame part has been formed of one piece for example by a chipping processing. Inner surface 111 of the cylinder part and the inner surface 112 of the cylinder head define the piston space 131, 132 inside the cylinder part and the piston unit 2 is arranged to be moved by means of a pressurized medium inside the piston space of the frame part.

The piston unit 2 of the regulating unit, which is in accordance with the present invention, comprises a central rod part, in other words the piston rod 21 which is directed upwards in the figure FIG.2, and an extension part as the lengthening of the piston rod, in other words piston part 22, which is directed towards the cylinder head 12 as the lengthening of the piston rod, in the figure FIG.2. This kind of a piston unit 2, which is composed of the piston rod and of the extension as the lengthening thereof, in other words of piston part, has been arranged to move back and forth by means of the pressurized medium in piston space 131, 132.

In a piston part 22 comprises at the side of the piston rod a first surface 23, from which the piston rod 21 extends that hence defines the first surface as ring-like forehead surface 23, and the second surface on the side of the cylinder head 12, which is directed as a flat surface 24, as it is shown in the figure FIG.2, or as a form surface (not presented in the figures), for example as a convex surface or a concave surface, towards the cylinder head 12.

The piston part 22 of the piston unit 2 comprises a cylindrical circle surface 25, which is between the first surface 23 and the second surface 24. The circle surface 25 has been equipped with the piston rings 26 to secure tightness. It is advantageous according to the invention that the piston rod 21 of the piston unit also has been equipped with the piston rings 27 for securing the tightness.

In the regulating unit, which is a hydraulic power cylinder and which is in accordance with the present invention and the figures F1G.1 and FIG.2, the form of the piston unit 2 corresponds essentially to the form of the piston space 131, 132. The piston space comprises the first space 131, in which the piston part 22 moves, and the second space 132, in which moves with the piston part the piston rod 21, the cross section area of which is smaller than the cross section area of the piston part.

The height of the first part is bigger than that of the piston part 22, in which case the piston part can move back and forth by the amplitude that corresponds to the height difference. Furthermore, the cross section area of the first space is bigger than the cross sections area of the piston rod 21 in piston space. Because the cross sections area of the second space 132 of the piston space is smaller than the cross section area of the first space 131 of the piston space and/or piston part 22, there is formed in the piston space stairs, which operates as a stepped surface, which restricts the movement of the piston unit into one direction, which is directed away from cylinder head 12. Thus the stepped surface forms a facing radial surface 14 for the forehead surface 23 of the piston part. The distance of the facing surface from the cylinder head is bigger than the height of the piston part 22.

For moving the piston unit 2 in the frame part 1 towards the cylinder head 12 or vice versa, there are or have been arranged connection of the frame part 1 means 1 for directing pressurized medium into a cavity of space 13, which is between the piston part 22 and the facing walls, i.e. the first forehead surface 23 or the second surface 24 and the radial surface 14, of the first space 13.

In the embodiment, which is in accordance with the figures FIG.1 and FIG.2, there are six pieces of means for directing the pressurized medium into the regulating unit, which means have been arranged at the outer circle of frame part 1 with even spaces. Each means includes the feeding channel 3 of the pressurized medium and feeding valve 4, which is fitted in the feeding channel 3, which is in a flow connection to the container of the pressurized medium, which can be for example a hydraulic reservoir, if the pressurized medium is fluid, or a pneumatic reservoir, if the pressurized medium is gaseous.

It is especially characteristic to the regulating unit, which is in accordance with the present invention, the quick regulating unit response, which can move the piston unit 2 with a desired amplitude and frequency in the piston spaces 131, 132. The desired amplitude can be accomplished with mutual dimensioning of the piston unit 2 and the piston space131, 132.

The quick regulating unit response, which is characteristic to the invention, can be reached by a combination of the quick feeding valves 4, which means a high level valve response that is advantageously of about 2 kHz, and the short feeding channel 3 or the pressurized medium, whereby the consequence of the short flow distance of the pressurized medium from the container of the pressurized medium inside the regulating unit and into cavity space 13 is that the piston unit moves fast inside the piston space and also that the delays are as small as possible.

A leak of the pressurized medium between the piston space 131, 132 and the piston unit 2 can happen due to the high pressures of the pressurized medium used in the regulating. For the minimising of this kind of a sealing leak at least one leak channel 5 has been arranged in the inner wall 111 of the cylinder part, which defines piston space of the frame part 1, which leak channels has been advantageously formed face-to-face with the piston rings 26 of the piston part 22 of the piston unit and/or with the piston rings 27 of the piston rod 21 of the piston unit 2. This kind of a leak channel can be for example a milled set of grooves or a groove in the wall of the cylinder wall that defines the piston space, through which the leak of the pressurized medium can be directed to a silencer and/or to the leak line of the pressurized medium.

According to the present invention, the pressurized medium, which controls the regulating unit, can be a fluid or gaseous medium. In case the pressurized medium is the fluid medium, such as oil, it is advantageous that the means 3, 4 for directing pressurized fluid, such as the oil, are arranged in connection with the frame part 1 and in flow connection with a hydraulic reservoir that is in a close vicinity of the frame part. Then the amount of fluid mediums to be needed by the quick feeding valves can be fed to the regulating unit with a short delay. If the pressurized medium is a gaseous medium, for example air, the feed pressure for directing the pressurized medium to the regulating unit can be even 20 MPa or higher. Then by the pneumatics application can be achieved same power levels as by the hydraulic application.

In order to achieve a desired power level and an amplitude of a desired size, and the quick frequency of the operation, the control of the regulating unit, which is in accordance with the present invention, can be carried out by means of the feedback control, in which the linear sensor or the power sensor can function as the sensor. The control can also be proportionally carried out without the feedback. The feeding valve of the regulating unit itself can be controlled electrically or can be as such a reel controlled valve.

The invention has described above only by means of a preferred embodiment example. However, this does not intend to define the invention by any means and many alternatives and modifications as well as functionally equivalent solutions are possible within the inventive idea, which has been defined by the enclosed set of patent claims.

So one must note that in addition to the regulating function the regulating unit is also applicable for example as
- a testing cylinder, by which vibration of the hydraulic pipe system can be tested,
- a sub-cylinder, by which mistakes of a quick control cylinders having longer strokes can be corrected,
- a braking cylinder for non-locking industrial brake applications, and
- organs, by which a quick change in the volume can be produced in a container.

## Claims

1. Regulating unit for accomplishing a linear movement, said regulating unit including a preferably cylindrical-shaped frame part (1), which comprises a cylinder part (11) and a cylinder head (12), which define a piston space (131, 132) and a piston unit (2), said piston unit being arranged to be moved by means of pressurized medium in the said space piston within the frame part (1), wherein a form of the piston unit (2) corresponds essentially to the piston space (131, 132) such that the said piston space includes a first space (131) and a second space (132), a height of which first space (131), in which a piston part (22) is moveable, is bigger than the facing height of said piston part (22) of the said piston unit (2), a cross section area of which first space (131) is bigger than a cross section area of a piston rod (21) of the said piston unit (2), a cross section area of which second space (132), in which the piston rod (21) is moveable with the piston part (22) of the piston unit (2), is smaller than the cross section area of the said piston part (22), and that there are arranged means (3, 4) in the frame part (1) for feeding pressurized medium into a cavity space (13), which is between the facing surfaces of the said piston part (22) and the said first piston space (131), for moving the piston unit towards the cylinder head (12) back and forth, **characterized in that** said arranged means (3, 4) consist of at least one feeding valve (3) and at least one feeding channel (4), each said feeding valve (3) having a frequency response of about 2kHz, each said feeding channel (4) being used for conveying the pressurized medium, wherein a quick regulating unit response is accomplished by reducing the delay for feeding pressurized medium from a container of the pressurized medium to said cavity space (13) that is between facing parts of the piston part (22) and piston space (131, 132), thus causing the piston unit (2) to oscillate.

2. Regulating unit which is in accordance with any of the patent claim 1, **characterized in that** there is arranged at least one leak channel (5) to the inner wall (111) that defines the piston space (131, 132) in the frame part (1), which leak channel has been formed face-to-face with the piston rings (26, 27) of the piston unit (2).

3. Regulating unit which is in accordance with the patent claim 2, **characterized in that** the leak channel (5) is composed of a set of grooves or a groove that is milled or exists in the inner wall (111) that defines the piston space (131, 132) of the frame part (1), through which channels the leak of the pressurized medium can be directed to a silencer and/or to the leak line for the pressurized medium.

4. A regulating unit, which is in accordance with any of the patent claims 1 to 3, **characterized in that** the pressurized medium, which directs the regulating unit is a fluid or gaseous medium.

5. Regulating unit, which is in accordance with the patent claim 4, **characterized in that**, when the pressurized medium is fluid, the means (3, 4), which are arranged in connection with the frame part (1), for feeding the pressurized medium, like oil, to the regulating unit are in a flow connection with at least one hydraulic reservoir that has been arranged in a close vicinity of the frame part, which hydraulic reservoir is adapted to feed the feeding valves (3) with desired amount of pressurized medium.

6. Regulating unit, which is in accordance with the patent claim 4, **characterized in that**, when the pressurized medium is a gaseous medium, for example air, the feed pressure of the pressurized medium for directing the same to the regulating unit is high even of class about 20Mpa, whereby power levels as by applying pressurized fluid medium can be reached.

7. A regulating unit, which is in accordance with any of the patent claims 1 to 6, **characterized in that**, in a case in which the control of the regulating unit is a feedback control, a linear sensor or a power sensor is used.

8. A regulating unit which is in accordance with any of the patent claims 1 to 6, **characterized in that** said regulating unit is adapted to be controlled proportionally without a feedback.

9. A regulating unit, which is in accordance with any of the patent claims 1 to 8, **characterized in that** the regulating unit is a hydraulic/pneumatic power cylinder, having hydraulics-/pneumatics reservoirs connected to the power cylinder, wherein the reservoirs are dimensioned to feed an amount of oil/the air corresponding to a frequency and amplitude of the movement of the regulating unit (1, 2).

10. A regulating unit according to any one of claims 1 to 9, wherein the number of feeding valves is six.

## Patentansprüche

1. Regulierungseinheit zum Bewirken einer linearen Bewegung, wobei die Regulierungseinheit einen vorzugsweise zylinderförmigen Rahmenteil (1), der einen Zylinderteil (11) und einen Zylinderkopf (12) aufweist, die einen Kolbenraum (131, 132) festlegen, und eine Kolbeneinheit (2) aufweist, wobei die Kolbeneinheit angeordnet ist, um mittels eines druckbeaufschlagten Mediums in dem Kolbenraum innerhalb des Rahmenteils (1) bewegt zu werden, wobei eine Form der Kolbeneinheit (2) im Wesentlichen dem Kolbenraum (131, 132) entspricht, so dass der Kolbenraum einen ersten Raum (131) und einen zweiten Raum (132) aufweist, wobei eine Höhe des ersten Raums (131), in dem ein Kolbenteil (22) beweglich ist, größer als die gegenüberliegende Höhe des Kolbenteils (22) der Kolbeneinheit (2) ist, ein Querschnittsbereich des ersten Raums (131) größer als ein Querschnittsbereich eines Pleuels (21) der Kolbeneinheit (2) ist, ein Querschnittsbereich des zweiten Raums (132), in dem der Pleuel (21) mit dem Kolbenteil (22) der Kolbeneinheit (2) beweglich ist, kleiner als der Querschnittsbereich des Kolbenteils (22) ist, und dass es angeordnete Mittel (3, 4) in dem Rahmenteil (1) zum Zuführen eines druckbeaufschlagten Mediums in einen Hohlraum (13) gibt, der zwischen den zugewandten Flächen des Kolbenteils (22) und des ersten Kolbenraums (131) ist, zum Bewegen der Kolbeneinheit zu dem Zylinderkopf (12) hin vorwärts und rückwärts, **dadurch gekennzeichnet, dass** die angeordneten Mittel (3, 4) aus wenigstens einem Zuführventil (3) und wenigstens einem Zuführkanal (4) bestehen, wobei jedes Zuführventil (3) eine Übertragungsfunktion von ungefähr 2 kHz hat, wobei jeder Zuführkanal (4) zum Fördern des druckbeaufschlagten Mediums verwendet wird, wobei ein schnelles Ansprechen der Regulierungseinheit durch ein Verringern der Verzögerung für ein Zuführen eines druckbeaufschlagten Mediums von einem Behälter des druckbeaufschlagten Mediums zu dem Hohlraum (13) bewirkt wird, der zwischen einander zugewandten Teilen des Kolbenteils (22) und Kolbenraums (131, 132) liegt, wodurch die Kolbeneinheit (2) zum Schwingen veranlasst wird.

2. Regulierungseinheit nach Anspruch 1, **dadurch gekennzeichnet, dass** wenigstens ein Leckkanal (5) an der Innenwand (111) angeordnet ist, die den Kolbenraum (131, 132) in dem Rahmenteil (1) festlegt, welcher Leckkanal gegenüber von den Kolbenringen (26, 27) der Kolbeneinheit (2) ausgebildet wurde.

3. Regulierungseinheit nach Anspruch 2, **dadurch gekennzeichnet, dass** der Leckkanal (5) aus einem Satz von Nuten oder einer Nut zusammengesetzt ist, die gefräst ist oder in der Innenwand (111) vorliegt, die den Kolbenraum (131, 132) des Rahmenteils (1) festlegt, durch welche Kanäle die Leckage des druckbeaufschlagten Mediums zu einem Dämpfer und/oder zu der Leckleitung für das druckbeaufschlagte Medium geleitet werden kann.

4. Regulierungseinheit nach einem der Ansprüche 1 bis 3, **dadurch gekennzeichnet, dass** das druckbeaufschlagte Medium, das die Regulierungseinheit regelt, ein flüssiges oder gasförmiges Medium ist.

5. Regulierungseinheit nach Anspruch 4, **dadurch gekennzeichnet, dass** dann, wenn das druckbeaufschlagte Medium flüssig ist, die Mittel (3, 4), die in Verbindung mit dem Rahmenteil (1) angeordnet sind, zum Zuführen des druckbeaufschlagten Mediums, wie zum Beispiel Öl, zu der Regulierungseinheit in einer Strömungsverbindung mit wenigstens einem Hydraulikreservoir sind, das in einem Nahbereich des Rahmenteils angeordnet wurde, wobei das Hydraulikreservoir angepasst ist, um die Zuführventile (3) mit einer gewünschten Menge des druckbeaufschlagten Mediums zu versorgen.

6. Regulierungseinheit nach Anspruch 4, **dadurch gekennzeichnet, dass** dann, wenn das druckbeaufschlagte Medium ein gasförmiges Medium ist, zum Beispiel Luft, der Zuführdruck des druckbeaufschlagten Mediums zum Regeln desselben zu der Regulierungseinheit hoch ist, selbst von einer Klasse von ungefähr 20 MPa, wodurch Leistungsniveaus wie durch ein Aufbringen eines druckbeaufschlagten flüssigen Mediums erreicht werden können.

7. Regulierungseinheit nach einem der Ansprüche 1 bis 6, **dadurch gekennzeichnet, dass** in einem Fall, in dem die Steuerung der Regulierungseinheit eine Regelung ist, ein linearer Sensor oder ein Leistungssensor verwendet ist.

8. Regulierungseinheit nach einem der Ansprüche 1 bis 6, **dadurch gekennzeichnet, dass** die Regulierungseinheit angepasst ist, um proportional gesteuert zu werden ohne eine Regelung.

9. Regulierungseinheit nach einem der Ansprüche 1 bis 8, **dadurch gekennzeichnet, dass** die Regulierungseinheit ein hydraulischer/pneumatischer Arbeitszylinder mit Hydraulik-/Pneumatikreservoirs ist, die mit dem Arbeitszylinder verbunden sind, wobei die Reservoirs dimensioniert sind, um eine Menge von Öl/Luft entsprechend einer Frequenz und Amplitude der Bewegung der Regulierungseinheit (1, 2) zuzuführen.

10. Regulierungseinheit nach einem der Ansprüche 1 bis 9, wobei die Anzahl von Zuführventilen sechs ist.

## Revendications

1. Unité de régulation destinée à réaliser un mouvement linéaire, ladite unité de régulation comportant une partie de cadre de préférence de forme cylindrique (1), qui comprend une partie de cylindre (11) et une culasse (12), qui définissent un espace de piston (131, 132) et une unité de piston (2), ladite unité de piston étant agencée pour être déplacée au moyen d'un milieu sous pression dans ledit espace de piston dans la partie de cadre (1), où une forme de l'unité de piston (2) correspond essentiellement à l'espace de piston (131, 132) de sorte que ledit espace de piston comporte un premier espace (131) et un deuxième espace (132), une hauteur du premier espace (131), où une partie de piston (22) peut se déplacer, est supérieure à la hauteur opposée de ladite partie de piston (22) de ladite unité de piston (2), une surface en coupe du premier espace (131) est supérieure à une surface en coupe d'une tige de piston (21) de ladite unité de piston (2), une surface en coupe du deuxième espace (132), où la tige de piston (21) est mobile avec la partie de piston (22) de l'unité de piston (2), est plus petite que la surface en coupe de ladite partie de piston (22), et qu'il existe des moyens agencés (3, 4) dans la partie de cadre (1) permettant d'alimenter un milieu sous pression dans un espace de cavité (13), qui se trouve entre les surfaces opposées de ladite partie de piston (22) et ledit premier espace de piston (131), pour déplacer l'unité de piston vers la culasse (12) selon un mouvement de va-et-vient, **caractérisée en ce que** lesdits moyens agencés (3, 4) sont constitués d'au moins une soupape d'alimentation (3) et au moins un canal d'alimentation (4), chacune desdites soupapes d'alimentation (3) ayant une réponse en fréquence d'environ 2kHz, chacun desdits canaux d'alimentation (4) étant utilisé pour transporter le milieu sous pression, où une réponse d'unité de régulation rapide est réalisée en réduisant le retard pour alimenter un milieu sous pression d'un conteneur du milieu sous pression audit espace de cavité (13) qui se trouve entre des parties opposées de la partie de piston (22) et l'espace de piston (131, 132), amenant ainsi l'unité de piston (2) à osciller.

2. Unité de régulation selon la revendication 1, **caractérisée en ce qu'**il existe au moins un canal de fuite (5) agencé à la paroi intérieure (111) qui définit l'espace de piston (131, 132) dans la partie de cadre (1), ce canal de fuite a été formé face-à-face avec les segments de piston (26, 27) de l'unité de piston (2).

3. Unité de régulation selon la revendication 2, **caractérisée en ce que** le canal de fuite (5) est composé d'un ensemble de rainures ou d'une rainure qui est fraisée ou existe dans la paroi intérieure (111) qui définit l'espace de piston (131, 132) de la partie de cadre (1), à travers ces canaux, la fuite du milieu sous pression peut être dirigée vers un silencieux et/ou vers la ligne de fuite pour le milieu sous pression.

4. Unité de régulation selon l'une des revendications 1 à 3, **caractérisée en ce que** le milieu sous pression, qui dirige l'unité de régulation est un milieu fluide ou gazeux.

5. Unité de régulation selon la revendication 4, **caractérisée en ce que**, lorsque le milieu sous pression est un fluide, les moyens (3, 4), qui sont agencés en liaison avec la partie de cadre (1), pour alimenter le fluide sous pression, comme l'huile, à l'unité de régulation sont en liaison d'écoulement avec au moins un réservoir hydraulique qui a été agencé au voisinage immédiat de la partie de cadre, ce réservoir hydraulique est adapté pour alimenter les soupapes d'alimentation (3) avec une quantité désirée de milieu sous pression.

6. Unité de régulation selon la revendication 4, **caractérisée en ce que**, lorsque le milieu sous pression est un milieu gazeux, par exemple l'air, la pression d'alimentation du milieu sous pression permettant de diriger ce dernier à l'unité de régulation, est élevée même à d'environ 20 Mpa, moyennant quoi des niveaux de puissance permettant d'appliquer un milieu fluide sous pression peuvent être obtenus.

7. Unité de régulation selon l'une des revendications 1 à 6, **caractérisée en ce que**, dans un cas où la commande de l'unité de régulation est un contrôle à rétroaction, un capteur linéaire ou un capteur de puissance est utilisé.

8. Unité de régulation selon l'une des revendications 1 à 6, **caractérisée en ce que** ladite unité de régulation est adaptée pour être commandée proportionnellement sans rétroaction.

9. Unité de régulation selon l'une des revendications 1 à 8, **caractérisée en ce que** l'unité de régulation est un cylindre de puissance hydraulique/pneumatique, ayant des réservoirs hydrauliques/pneumatiques liés au cylindre de puissance, où les réservoirs sont dimensionnés pour fournir une quantité d'huile/d'air correspondant à une fréquence et une amplitude du mouvement de l'unité de régulation (1, 2).

10. Unité de régulation selon l'une quelconque des revendications 1 à 9, dans laquelle le nombre de soupapes d'alimentation est six.
